# EUROPÄISCHE PATENTSCHRIFT

(11) **EP 2 635 732 B1**
(45) Veröffentlichungstag und Bekanntmachung des Hinweises auf die Patenterteilung: **13.05.2015**
(21) Anmeldenummer: 11782096.9
(22) Anmeldetag: 03.11.2011
(51) Int. Cl.: B32B 5/02, B32B 5/06, B29C 70/08, D04H 11/00, D04H 3/045, B29B 11/16, B32B 7/12, D04H 1/4242, D04H 1/498, D04H 5/02

(54) **VERSTÄRKTER VLIESSTOFF**
REINFORCED NONWOVEN FABRIC
TISSU NON TISSÉ RENFORCÉ

(30) Priorität: 06.07.2011 DE 102011078741; 06.07.2011 DE 102011078739; 21.06.2011 DE 102011077879; 21.06.2011 DE 102011077881; 21.06.2011 DE 102011077880; 03.11.2010 DE 102010043349; 03.11.2010 DE 102010043347; 03.11.2010 DE 102010043300; 03.11.2010 DE 102010043345; 03.11.2010 DE 102010043346
(43) Veröffentlichungstag der Anmeldung: 11.09.2013
(73) Patentinhaber: SGL Automotive Carbon Fibers GmbH & Co. KG, 80939 München (DE)
(72) Erfinder: DANZER, Martin, 92442 Wackersdorf (DE)
(86) Internationale Anmeldenummer: PCT/EP2011/069313
(87) Internationale Veröffentlichungsnummer: WO 2012/059538

(56) Entgegenhaltungen:
- WO-A1-01/85439
- WO-A2-01/92002
- JP-A- 5 156 595
- KR-A- 20100 122 711

## Beschreibung

### GEBIET DER ERFINDUNG

Die vorliegende Erfindung betrifft ein, zur verbesserten Handhabung während des Herstellungsverfahrens, verstärkten Vliesstoff, ein Bauteil in das der verstärkte Vliesstoff eingearbeitet ist und dessen Anwendung. Insbesondere betrifft die vorliegende Erfindung ein Carbonfaservlies mit einem darin enthaltenen Verstärkungsgitter.

### HINTERGRUNG DER ERFINDUNG

Bei der Herstellung von textilen Flächengebilden mit relativ geringem Zusammenhalt der Textilfasern untereinander, wie zum Beispiel bei Faservlies oder Faserflor, können einfachste Handhabungsprozesse, wie das Auf- und Abrollen der Flächengebilde oder die automatisierte Zuführung dieser zu weiteren Produktionsstufen, ein Problem darstellen. Eine Möglichkeit diesem Problem zu begegnen ist, ein Verstärkungsgitter in das Flächengebilde einzuarbeiten. Diese Grundstruktur von zwischen Faserflorschichten eingearbeiteten Verstärkungsschichten bildet den Ausgangspunkt der vorliegenden Erfindung.

In der DE 92 07 367 U1 ist ein Schichtstoff offenbart, dessen Oberflächen aus Spinnvliesen gebildet werden und der aus mindestens zwei Schichten von Spinnvliesen und mindestens einer Gelegeschicht, bevorzugt einer Gelegeschicht aus Verstärkungsgarnen besteht, wobei die Gelegeschichten bzw. die Gelegeschicht jeweils zwischen zwei Spinnvlies-Schichten liegen (DE 92 07 367 U1, Seite 2, 2. vollständiger Absatz).

DE 10 2006 060 241 A1 offenbart eine Trägereinlage, enthaltend ein textiles Flächengebilde und eine Verstärkung, bei der die Verfestigung des textilen Flächengebildes, welches bereits die Verstärkung aufweist, hydrodynamisch erfolgt ist. Insbesondere werden Spinnvliese beschrieben, die durch eine Wirrablage frisch schmelzgesponnener Filamente erzeugt werden und aus Endlos-Synthesefasern aus schmelzspinnbaren Polymermaterialien bestehen (DE 10 2006 060 241 A1, Absatz [0036]).

EP 1 584 737 A1 offenbart ein verstärktes flächiges Vlies, dass mindestens zwei Lagen Endlosfaser-Vlies aus Polyester und ein, zwischen den Vlieslagen angebrachtes Glasfasergitter umfasst.

WO 01/85439 A1 offenbart ein verfestiges textiles Flächengebilde umfassend ein Verstärkungsgitter und mindestens eine flächig auf mindestens einer Oberfläche des Verstärkungsgitter sich befindende Florschicht, die aus Carbonfasern besteht.

Die genannten Veröffentlichungen betreffen hauptsächlich die Verwendung der textilen Flächengebilde zur Herstellung von bituminierten Dach- oder Dichtungsbahnen. Für die Vliesstoffe werden dabei hauptsächlich schmelzspinnbare Polymere verwendet und keine Carbonfasern. Bei derartigen Anwendungen sind jedoch keine besonderen Anforderungen an Gewichtsreduktion und mechanische Stabilität geboten. Für die Herstellung von Bauteilen, die dahingehend höheren Anforderungen unterliegen, wie beispielsweise im Automobil- oder Luftfahrtbereich, reichen die bekannten Lehren daher nicht aus.

Benötigt werden hierfür daher auch dünne textile Flächengebilde, die das fertige Bauteil, in welchem das textile Flächengebilde letztlich eingearbeitet ist, dazu befähigen, möglichst hohen mechanischen Belastungen zu widerstehen. Daher zielt die vorliegende Erfindung auf textile Flächengebilde aus, oder überwiegend aus, Carbonfasern ab.

Eine Schwierigkeit bei Carbonfasern aus herstellungstechnischer Sicht, besteht in der Beschaffenheit der Oberfläche der Carbonfasern. Carbonfasern besitzen im Vergleich zu anderen Polymerfasern eine sehr glatte Oberfläche. Dies hat zur Folge, dass Carbonfasern in textilen Flächengebilden eine sehr schwache Haftung der Fasern untereinander aufweisen und damit zu einem geringen Zusammenhalt der textilen Flächengebilde führen. Diese geringe Haftung, beziehungsweise dieser geringe Zusammenhalt wirkt sich schließlich auf das Herstellungsverfahren textiler Flächengebilde aus Carbonfasern aus, weshalb ein Verstärkungsgitter notwenig ist.

Weiterhin wird ein textiles Flächengebilde benötigt, das bestimmten optischen und taktilen Anforderungen genügt. So darf das in dem Vliesstoff enthaltene Verstärkungsgitter sowohl von außen möglichst wenig sichtbar sein, noch sollten sich an der Oberfläche des textilen Flächengebildes, durch die Maschen des Verstärkungsgitters hervorgerufene Mulden bilden.

Für die mechanische Stabilität des letztendlichen Bauteils, in dem das textile Flächengebilde eingearbeitet ist, sind jedoch hauptsächlich die Vliesschichten, aufgrund Ihres Anteils an Carbonfasern, verantwortlich, sodass sich das Vorhandensein eines Verstärkungsgitters abträglich auf das Fegtigkeits/Gewichts-Verhältnis des Bauteils auswirkt.

Zudem beeinflusst der Einsatz eines Verstärkungsgitters das Drapierverhalten des Vliesstoffs. Dabei nimmt die Verschlechterung der Drapierbarkeit mit steigender Festigkeit des Verstärkungsgitters zu.

Gleichzeitig jedoch muss das Verstärkungsgitter den Zweck erfüllen, wozu es verwendet wird, und zwar die ausreichende Verstärkung des textilen Flächengebildes zur verbesserten Handhabung desselben im Herstellungsprozess zu gewährleisten.

Die Aufgabe der vorliegenden Erfindung stellt demnach die Bereitstellung eines textilen Flächengebildes dar, das die genannten erwünschten Eigenschaften aufweist und dabei die genannten Nachteile weitestgehend vermieden werden.

### ZUSAMMENFASSUNG DER ERFINDUNG

Die Aufgabe der vorliegenden Erfindung wird gelöst durch eine vorteilhafte Kombination von Schichtdicke bzw. Flächengewicht des textilen Flächengebildes, dem Anteil an Carbonfasern am Flächengewicht und dem anteiligen Flächengewicht des Verstärkungsgitters.

Ein Aspekt der vorliegenden Erfindung ist ein textiles Flächengebilde umfassend ein Verstärkungsgitter und mindestens eine flächig auf mindestens einer Oberfläche des Verstärkungsgitters sich befindende Florschicht, dadurch gekennzeichnet, dass
- das textile Flächengebilde ein Flächengewicht von 40 bis 140 g/m2 aufweist,
- die Florschicht überwiegend aus Carbonfasern bestehen,
- die Carbonfasern im textilen Flächengebilde einen Anteil am Flächengewicht von 60 bis 97% aufweisen,
- das Verstärkungsgitter ein anteiliges Flächengewicht von 2,5 bis 12,5 g/m2 aufweist und
- das textile Flächengebilde verfestigt ist, wobei sich das Verstärkungsgitter zwischen zwei aufeinanderfolgenden Florschichten befindet.

Ein weiterer Aspekt der vorliegenden Erfindung ist ein Artikel, der mindestens zwei flächig miteinander verbundene textile Flächengebilde gemäß der vorliegenden Erfindung umfasst.

Ein weiterer Aspekt der vorliegenden Erfindung ist ein Bauteil, das das erfindungsgemäße textile Flächengebilde oder den erfindungsgemäßen Artikel imprägniert mit einer Polymermatrix umfasst.

Ein weiterer Aspekt der vorliegenden Erfindung ist die Verwendung des erfindungsgemäßen Bauteils zur Herstellung von Teilen eines Automobils.

### DETAILLIERTE BESCHREIBUNG DER ERFINDUNG

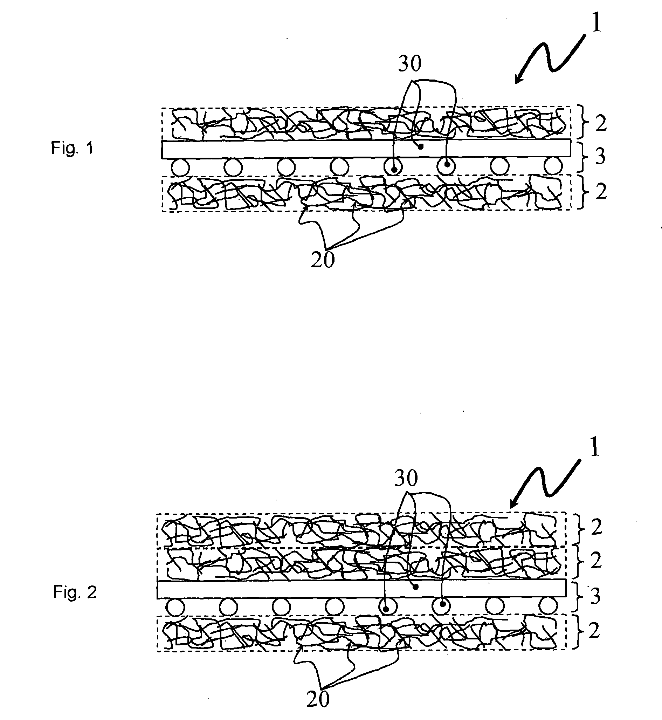

Figur 1 zeigt den schematischen Aufbau eines textilen Flächengebildes (**1**) Hierbei ist das Verstärkungsgitter (**3**), dargestellt durch dessen Gitterstreben (**30** ),zwischen zwei Florschichten (**2** ) dargestellt durch deren Fasern (**20** ), angebracht.
Figur 2 zeigt den schematischen Aufbau der Ausführungsform des erfindungsgemäßen textilen Flächengebildes (**1** ).Hierbei liegen auf einer Seite des Verstärkungsgitters (**3** )zwei aufeinanderliegende Florschichten (2) und auf der anderen Seite eine Florschicht (**2** ). Diese Ausführungsform ist deshalb vorteilhaft, da die Oberfläche des textilen Flächengebildes (**1**) auf der Seite mit den zwei aufeinanderfolgenden Florschichten (**2**) bessere optische und taktile Eigenschaften aufweist. Dies ist dann von Vorteil, wenn bei dem späteren Bauteil, in das das textile Flächengebilde (**1**) eingearbeitet ist, vorwiegend nur eine Seite des Bauteils sichtbar ist, wie zum Beispiel bei Fahrzeugtüren.

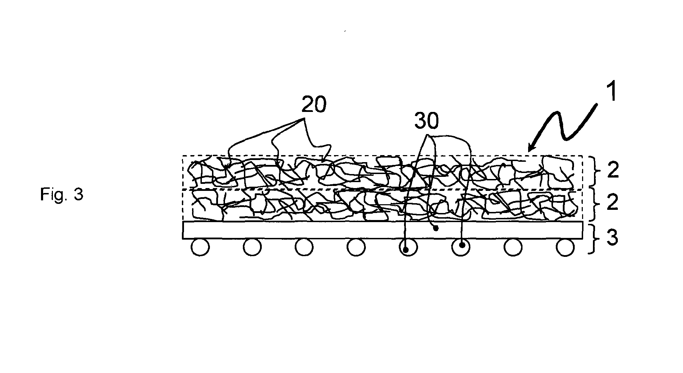

Figur 3 zeigt den Schematischen Aufbau eines textilen Flächengebildes **(1).** Hierbei liegen auf einer Seite des Verstärkungsgitters **(3)** zwei aufeinanderliegende Florschichten **(2)** während die andere Seite des Verstärkungsgitters **(3)** frei bleibt. Diese Ausführungsform ist besonders dann vorteilhaft, wenn die optischen und taktilen Anforderungen ausschließlich eine Seite des textilen Flächengebildes **(1)** betreffen.

Der Begriff "Florschicht" ist dem Fachmann bekannt. Er bezeichnet eine lose Schicht aus wirr ineinander verschlungenen Einzelfasern, die nicht, wie etwa beispielsweise durch Vernadelung, verfestigt ist.

Verfahren zur Herstellung einer Florschicht **(2),** wie zum Beispiel Krempeln oder Kardieren, sind dem Fachmann bekannt. Je nach Verfahren sind die Ausrichtungen der einzelnen Fasern **(20)** in der Florschicht **(2)** mehr oder weniger homogen verteilt. In manchen Verfahren jedoch, weisen die Fasern **(20)** in der Florschicht **(2)** eine Vorzugsrichtung auf, wie zum Beispiel im Krempelverfahren. Das bedeutet, dass die Ausrichtung der Fasern **(20)** in der Florschicht **(2)** in einer bestimmten Richtung häufiger auftritt, als in anderen Richtungen. Dies entsteht dadurch, dass die Fasern **(20)** während des Krempelns immer in derselben Richtung hin- und hergekämmt werden. Dies hat zur Folge, dass die resultierende Florschicht **(2)** längs zur Vorzugsrichtung der Fasern **(20)** häufig eine höhere Festigkeit aufweist, als senkrecht dazu. Der Begriff der "Vorzugsrichtung" der Florschicht **(2)** ist in der vorliegenden Erfindung gemäß der hier gegebenen Definition zu verstehen.

Ein "Vlies" oder ein "Vliesstoff" oder eine "Vlies"- oder "Vliesstoffschicht", bezeichnet eine Florschicht **(2),** die, beispielsweise durch Vernadelung, verfestigt ist.

Verfahren zur Verfestigung einer Florschicht **(2)** zu einer Vliesschicht, wie zum Beispiel Vernadeln, sind dem Fachmann bekannt. Verfahren zur Verfestigung können thermischer, mechanischer oder chemischer Art sein. Bei der thermischen Verfestigung wird typischerweise ein Medium aufgeschmolzen, welches dem textilen Flächengebilde etwa schon bei der Herstellung des Faserflors zugesetzt wird. Mechanische Verfahren umfassen indes das Vernadeln und Vernähen. Beim chemischen Verfahren wird typischerweise ein Kleber aufgesprüht. Bei der Verfestigung des erfindungsgemäßen textilen Flächengebildes **(1)** finden die, die Florschicht **(2)** betreffenden Verfahren ebenfalls Anwendung. Dabei werden alle im textilen Flächengebilde **(1)** vorhandenen Florschichten **(2)** und das Verstärkungsgitter **(3)** miteinander verbunden. Bei mechanischer Verfestigung geschieht dies derart, dass die Gitterstreben des Verstärkungsgitters **(3)** mit einzelnen Fasern der angrenzenden Florschichten **(2)** verschlungen sind, wodurch eine stärkere Verbindung des Verstärkungsgitters **(3)** an die Florschichten **(2)** erreicht wird.

Weist die zum Vlies weiterverarbeitete Florschicht **(2)** eine Vorzugsrichtung der Fasern **(20)** auf, so ist diese häufig auch an der Oberfläche des Vliesstoffs, zum Beispiel nach der Vernadelung der Florschicht **(2),** zu erkennen.

Im Rahmen dieser Erfindung wird das erfindungsgemäße textile Flächengebilde **(1)** in bestimmten Zusammenhängen als "Vlieslage" bezeichnet.

Bei einer bevorzugten Ausführungsform der vorliegenden Erfindung weist das textile Flächengebilde **(1)** ein Flächengewicht von 80-110 g/m² auf, wobei die Carbonfasern im textilen Flächengebilde **(1)** ein anteiliges Flächengewicht von 65 bis 84% aufweisen und das Verstärkungsgitter **(3)** ein anteiliges Flächengewicht von 3 bis 10 g/m² aufweist. Diese Ausführungsform eignet sich besonders für die Verwendung in Bauteilen für den Automobilbereich als Ersatz für dünne Bleche, wie zum Beispiel Motorhaube, Türen, Kotflügel, etc.

Das Verstärkungsgitter **(3)** befindet sich zwischen zwei aufeinanderfolgenden Florschichten **(2)** im inneren des textilen Flächengebildes (**1**). Vorteil hierbei ist, dass die gewünschte optische und taktile Beschaffenheit an beiden Oberflächen des textilen Flächengebildes **(1)** gewährleistet werden kann.

Daneben kann es auch von Vorteil sein, wenn sich das Verstärkungsgitter **(3)** an der Außenseite des textilen Flächengebildes **(1)** befindet. Hierbei können sehr dünne textile Flächengebilde **(1)** hergestellt werden, die zumindest an einer Seite die gewünschte optische und taktile Beschaffenheit aufweisen. Besonders geeignet ist diese Ausführungsform daher für den Einsatz in erfindungsgemäßen Bauteilen, die bestimmungsgemäß im fertigen Produkt, wie zum Beispiel Fahrzeugtüren, nur von einer Seite sichtbar sind.

Die Florschichten **(2)** bestehen erfindungsgemäß überwiegend aus Carbonfasern. Der Teil, der nicht aus Carbonfasern besteht wird im Rahmen dieser Erfindung als "Fremdfaseranteil" bezeichnet. Je nach Zusammenhang kann sich der Fremdfaseranteil sowohl auf das gesamte Flächengebilde, als auch nur auf die Florschicht **(2)** beziehen. Grundsätzlich ist ein niedriger Fremdfaseranteil erwünscht, da mit steigendem Fremdfaseranteil die Stabilität des erfindungsgemäßen Bauteils sinkt. Allerdings sind Carbonfasern sehr kostenintensiv. Bei Erreichen ausreichender Stabilität des Bauteils können daher den zu verarbeitenden Fasern gezielt Fremdfasern zugefügt werden, und zwar derart, dass die Carbonfasern einen Anteil am Gesamtflächengewicht des textilen Flächengebildes **(1)** gemäß dem Gegenstand der vorliegenden Erfindung aufweisen, bevorzugt einen Anteil von 65 bis 84%.

Das Material und die Beschaffenheit des Verstärkungsgitters **(3)** sind nicht besonders eingeschränkt. Es ist vorzugsweise aus Fäden von Endlosfasern **(30)** aufgebaut, die als Gelege, Gewebe, Gestrick oder Gewirk vorliegen, wobei Gelege bevorzugt sind, da sie am einfachsten herzustellen sind und an den Kreuzungspunkten, im Vergleich zum Gewirk, die geringste Schichtdicke aufweisen.

Die Fasern im Verstärkungsgitter **(3)** können beispielsweise aus Polyester, Glas, Polyamid, Polyethylen, Aramidfasern und/oder Carbon aufgebaut sein, wobei Polyester und Glas, aus Kostengründen in Verbindung mit dem Verhältnis aus Festigkeit und Faserdicke, bevorzugte Materialen darstellen.

Ungeachtet, ob es sich bei dem Verstärkungsgitter **(3)** um Gelege, Gewebe, Gestricke oder Gewirke handelt, werden, gemäß der allgemeinen Bedeutung eines Gitters, die strukturellen Bestandteile des Verstärkungsgitters **(3)** im Rahmen dieser Erfindung als "Streben" oder "Gitterstreben" und "Kreuzungspunkte" bezeichnet.

Der bevorzugte Titer der Streben **(30)** des Verstärkungsgitters **(3)** beträgt bevorzugt 120 bis 350 dtex. Weiter bevorzugt sind Titer zwischen 150 und 280 dtex, da in diesem Bereich hinsichtlich der Festigkeit und der Ausprägung der Mulden, die von den Maschen des Verstärkungsgitters **(3)** auf der Oberfläche des erfindungsgemäßen textilen Flächengebildes **(1)** gebildet werden, optimale Ergebnisse erzielt werden, sowie eine ausreichende Drapierbarkeit gewährleistet ist.

Die Kreuzungspunkte des Verstärkungsgitters **(3)** können ein Bindemittel aufweisen. Stellt das Verstärkungsgitter **(3)** eine Gelegeschicht dar, so ist die Verwendung eines Bindemittels an den Kreuzungspunkten bevorzugt. Die Wahl des Bindemittels ist nicht besonders eingeschränkt. Bindemittel auf PVAC-Basis sind jedoch bevorzugt, da sie heisssiegelfähig sind und das Verstärkungsgitter **(3)** dadurch besonders einfach uns kostengünstig herstellbar ist.

Das Verstärkungsgitter **(3)** besteht hinsichtlich des strukturellen Aufbaus bevorzugt aus zwei bis drei Scharen von parallelen Streben **(30).** Mehr als drei Scharen sind jedoch auch möglich.

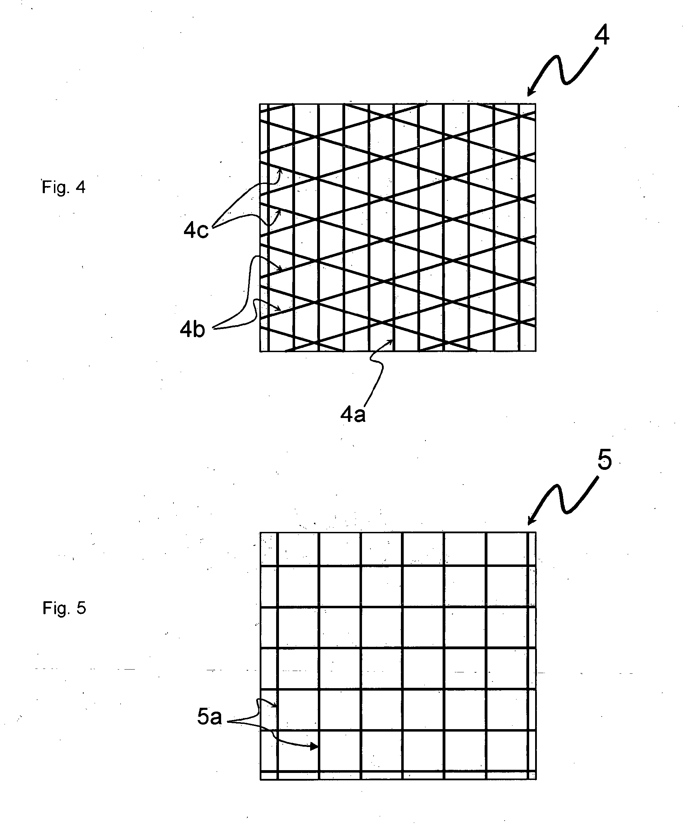

Besteht der strukturelle Aufbau aus zwei Scharen von parallelen Streben **(5a),** so ist die Schachbrettstruktur **(5)** bevorzugt, d.h. das Verstärkungsgitter **(3)** weist quadratische Maschen auf. Ein Ausschnitt dieser Struktur ist in Figur 5 schematisch abgebildet. Vorteil hierbei ist eine maximale Isotropie der Festigkeit des Flächengebildes, also eine Richtungsunabhängigkeit der Festigkeit. Der Abstand der Streben **(5a)** untereinander beträgt in dieser Ausführungsform bevorzugt 10 bis 50 mm, weiter bevorzugt 10 bis 18 mm, da bei kleineren Maschen, die oben beschriebenen Mulden weniger ausgeprägt sind.

Besteht der strukturelle Aufbau aus drei Scharen von parallelen Streben **(4a, 4b, 4c),** so werden die Streben einer Schar als "Längsstreben" **(4a)** bezeichnet und die Streben der beiden anderen Scharen als "Diagonalstreben" **(4b, 4c).** Ein Ausschnitt dieser Struktur ist in Figur 4 schematisch abgebildet. Bevorzugt hierbei ist ein struktureller Aufbau, wobei eine Schar von Diagonalstreben **(4b)** im Winkel größer 45° und kleiner 90° und die andere Schar von Diagonalstreben **(4c)** im Winkel kleiner -45° und größer -90° zu den Längsstreben **(4a)** angeordnet ist und die Winkel beider Scharen von Diagonalstreben **(4b, 4c)** zu den Längsstreben **(4a)** jeweils betragsgleich sind. Die Scharen der Diagonalstreben **(4b, 4c)** isoliert betrachtet bilden also rautenförmige Maschen. Der Abstand der Längsstreben **(4a)** untereinander beträgt in dieser Ausführungsform bevorzugt 5 bis 20 mm. Der Abstand der Diagonalstreben **(4b, 4c)** innerhalb einer Schar beträgt in dieser Ausführungsform bevorzugt 7 bis 50 mm, da so die oben beschriebenen Mulden wenig ausgeprägt sind und gleichzeitig eine ausreichende Festigkeit gewährleistet ist.

Unabhängig davon wie das Gitter **(3)** ausgebildet ist, wird bei der Zusammenführung des Verstärkungsgitters **(3)** mit den Florschichten **(2)** vorzugsweise eine Schar paralleler Streben **(30)** des Verstärkungsgitters **(3)** längs zur Vorzugsrichtung der Fasern **(20)** der Florschichten **(2),** so vorhanden, ausgerichtet. Dies dient der Vereinfachung des Herstellungsverfahrens.

Ein Verfahren zur Herstellung des erfindungsgemäßen textilen Flächengebildes **(1),** in dem das Verstärkungsgitter **(3)** zwischen zwei aufeinanderfolgenden Florschichten **(2)** angeordnet ist, umfasst typischerweise die folgenden Schritte, bevorzugt innerhalb eines kontinuierlichen Prozesses:
a) Herstellung einer Florschicht **(2)** mit gewünschtem Flächengewicht,
b) gegebenenfalls Herstellung weiterer Florschichten **(2)** und Aufbringung dieser auf die unter a) hergestellten Florschicht **(2),**
c) Aufbringung des Verstärkungsgitters **(3)** auf die unter a) hergestellte Florschicht **(2)** oder gegebenenfalls auf den Stapel der unter a) und b) hergestellten Florschichten **(2),**
d) Aufbringung mindestens einer weiteren Florschicht **(2)** auf das unter c) bereitgestellte Verstärkungsgitter **(3),**
e) Verfestigung der unter a) bis d) aufeinander aufgebrachten Lagen, beispielsweise durch Vernadelung, und
f) Aufnahme des unter e) entstandenen Flächengebildes **(1),** beispielsweise auf eine Rolle.

Ein Verfahren zur Herstellung des textilen Flächengebildes **(1),** in dem das Verstärkungsgitter (3) an der Außenseite des textilen Flächengebildes **(1)** angebracht ist, umfasst typischerweise die folgenden Schritte, bevorzugt innerhalb eines kontinuierlichen Prozesses:
a) Aufbringung mindestens einer Florschicht **(2)** auf ein Verstärkungsgitter **(3),**
b) Verfestigung der unter a) aufeinander aufgebrachten Lagen, beispielsweise durch Vernadelung, und
c) Aufnahme des unter b) entstandenen Flächengebildes (**1**), beispielsweise auf eine Rolle.

Der Begriff "Lage" in Verbindung mit dem oben beschriebenen Verfahren steht sowohl für eine Florschicht **(2) als** auch für das Verstärkungsgitter **(3).**

Gemäß einem weiteren Aspekt der vorliegenden Erfindung, können mehrere Lagen des erfindungsgemäßen textilen Flächengebildes **(1),** im folgenden als "Vlieslagen" bezeichnet, flächig miteinander verbunden werden, wodurch der erfindungsgemäße Artikel entsteht.

Die Vorzugsrichtungen der einzelnen Vlieslagen **(1)** können, so vorhanden, parallel zueinander ausgerichtet sein. Es kann, je nach Anwendung und Einsatzort des Artikels jedoch auch von Vorteil sein, die Vlieslagen **(1)** in Bezug auf ihre Vorzugsrichtung in unterschiedlichen Winkeln zueinander flächig zu verbinden. Eine bevorzugte Ausführungsform stellt ein Verbund aus drei Vlieslagen **(1)** dar, wobei die Vorzugsrichtung der mittleren und die der oberen Vlieslage **(1)** im Winkel von 45° beziehungsweise -45° zur Vorzugsrichtung der unteren Vlieslage **(1)** ausgerichtet sind. Dadurch wird eine Zunahme der Isotropie der Festigkeit des Artikels und der daraus hergestellten Bauteile erzielt.

Die Verbindung der erfindungsgemäßen Vlieslagen **(1)** kann beispielsweise durch einfaches Zusammennähen oder auch erneutes Vernadeln erreicht werden. Andere Verbindungsarten sind jedoch ebenfalls möglich.

Zwischen zwei oder mehreren Vlieslagen **(1)** des erfindungsgemäßen Artikels kann, gemäß einer bevorzugten Ausführungsform, mindestens eine Gitterlage vorgesehen sein. Diese bewirkt, dass bei dem Imprägniervorgang, z.B. beim Injizieren einer flüssigen Polymermatrix, zur Herstellung des erfindungsgemäßen Bauteils, das Polymermaterial besser in den Komplex mehrerer Vlieslagen eindringen und diesen optimal imprägnieren kann, ohne dass die einzelnen Vlieslagen **(1)** relativ zueinander verrutschen. Die Gitterlage kann gemäß dem erfindungsgemäßen Verstärkungsgitter **(3)** aufgebaut sein. Es ist jedoch auch möglich, ein anders aufgebautes Gitter zu verwenden. Gewirke oder Gelege aus Polyesterfäden sind hierbei bevorzugt, da sie einfach und kostengünstig herstellbar sind.

Gemäß einem weiteren Aspekt der vorliegenden Erfindung wird das erfindungsgemäße textile Flächengebilde **(1)** oder der erfindungsgemäße Artikel mit einer Polymermatrix imprägniert, wobei das erfindungsgemäße Bauteil entsteht.

Die Materialien der Polymermatrix sind nicht besonders eingeschränkt. Geeignete Materialien der Polymermatrix sind üblicherweise Harze, wie Polyesterharze, Epoxydharze und Vinylesterharze, die in der Herstellung von Faserverbundwerkstoffen Anwendung finden.

Geeignete Verfahren zur Imprägnierung von textilen Flächgebilden **(1),** wie zum Beispiel Harzinjektions- oder Infusionsverfahren, sind dem Fachmann bekannt. Durch anschließendes Aushärten, beispielsweiseweise durch erhöhte Temperatur, entsteht ein Bauteil in der gewünschten Form. Dadurch ist es meist nötig, das textile Flächengebilde **(1)** zuvor auf eine starre Form zu drapieren. Das erfindungsgemäße textile Flächengebilde **(1)** zeichnet sich hierbei, aufgrund seiner Ausgestaltung, durch eine optimale Drapierbarkeit aus.

Gemäß einem weiteren Aspekt der vorliegenden Erfindung wird das erfindungsgemäße Bauteil zur Herstellung von Teilen eines Automobils verwendet. Art und Funktionalität der Bauteile sind dabei nicht besonders eingeschränkt. Es kommen tragende und nicht tragende Bauteile in betracht. Nichttragende Teile sind hierbei bevorzugt.

Tragende Teile, wie A-, B- oder C-Säule, in einem Automobil sind hochbelastbare Komponenten. Sofern sie aus Faserverbundwerkstoffen aufgebaut sind, kommen üblicherweise Gewebematten oder Gelege zum Einsatz, wobei die Faserbündel in den Gewebematten oder Gelegen so ausgerichtet sind, dass einwirkende Kräfte optimal aufgenommen bzw. umgeleitet werden, das heißt, Faserbündel in den Gewebematten oder Gelegen sind bevorzugt in Richtung der Kraftreinwirkung ausgerichtet. In Vliesstoffen ist die Festigkeit strukturbedingt in alle Richtungen verteilt, wobei die durch Kämmen des Faserflors erzeugten Vorzugsrichtungen die Anisotropie der Festigkeit des Vliesstoffs wieder erhöhen kann. Daher ist der Einsatz von aus Vliesen hergestellten Faserverbundwerkstoffen in hochbelastbaren Komponenten eines Fahrzeugs möglich. Ein kombinierter Einsatz von Vliesstoffen und Gewebematten bzw. Gelegen, wie beispielsweise in Form von Vliesgelegekomplexen, ist jedoch ebenfalls möglich.

## Patentansprüche

1. Textiles Flächengebilde **(1)** umfassend ein Verstärkungsgitter **(3)** und mindestens eine flächig auf mindestens einer Oberfläche des Verstärkungsgitters (3) sich befindende Florschicht **(2), dadurch gekennzeichnet, dass**
- das textile Flächengebilde **(1)** ein Flächengewicht von 40 bis 140 g/m² aufweist,
- die Florschicht **(2)** überwiegend aus Carbonfasern besteht,
- die Carbonfasern im textilen Flächengebilde **(1)** einen Anteil am Flächengewicht von 60 bis 97% aufweisen,
- das Verstärkungsgitter **(3)** ein anteiliges Flächengewicht von 2,5 bis 12,5 g/m² aufweist und
- das textile Flächengebilde (1) verfestigt ist,
wobei sich das Verstärkungsgitter **(3)** zwischen zwei aufeinanderfolgenden Florschichten **(2)** befindet.

2. Textiles Flächengebilde **(1)** nach Anspruch 1, **dadurch gekennzeichnet, dass**
- das textile Flächengebilde **(1)** ein Flächengewicht von 80-110 g/m² aufweist,
- die Carbonfasern im textilen Flächengebilde **(1)** einen Anteil am Flächengewicht von 65 bis 84% aufweisen und
- das Verstärkungsgitter **(3)** ein anteiliges Flächengewicht von 3 bis 10 g/m² aufweist.

3. Textiles Flächengebilde (1) nach einem der Ansprüche 1 oder 2, **dadurch gekennzeichnet, dass** das Material des Verstärkungsgitters **(3)** Polyester und/oder Glas umfasst.

4. Textiles Flächengebilde **(1)** nach einem der Ansprüche 1 bis 3, **dadurch gekennzeichnet, dass** die Streben **(30)** des Verstärkungsgitters eine Titer von 120 bis 350 dtex aufweisen.

5. Textiles Flächengebilde **(1)** nach einem der Ansprüche 1 bis 4, **dadurch gekennzeichnet, dass** die Kreuzungspunkte des Verstärkungsgitters **(3)** ein Bindemittel aufweisen.

6. Textiles Flächengebilde **(1)** nach einem der Ansprüche 1 bis 5, **dadurch gekennzeichnet, dass** das Verstärkungsgitter **(3)** als Fadengelege ausgebildet ist.

7. Textiles Flächengebilde **(1)** nach einem der Ansprüche 1 bis 6, **dadurch gekennzeichnet, dass** das Verstärkungsgitter **(1)** eine Schar paralleler Längsstreben **(4a)** in einer bestimmten Richtung und Scharen paralleler Diagonalstreben **(4b, 4c)** diagonal zu den parallelen Längsstreben aufweist, wobei eine Schar paralleler Diagonalstreben **(4b)** im Winkel größer 45° und kleiner 90° und eine andere Schar paralleler Diagonalstreben **(4c)** im Winkel kleiner -45° und größer -90° zu den parallelen Längsstreben **(4a)** angeordnet ist und die Winkel der beiden Scharen paralleler Diagonalstreben **(4b, 4c)** zu den parallelen Längsstreben **(4a)** jeweils betragsgleich sind.

8. Textiles Flächengebilde (**1**) nach Anspruch 7, **dadurch gekennzeichnet, dass** die Längsstreben **(4a)** mit einem Abstand von 5 bis 20 mm zueinander vorliegen und die Diagonalstreben **(4b, 4c)** mit einem Abstand von 7 bis 50 mm zueinander vorliegen.

9. Textiles Flächengebilde **(1)** nach einem der Ansprüche 1 bis 6, **dadurch gekennzeichnet, dass** das Verstärkungsgitter **(3)** schachbrettartig ausgebildet ist.

10. Textiles Flächengebilde (**1**) nach Anspruch 9, **dadurch gekennzeichnet, dass** die jeweils parallel angeordneten Streben **(5a)** mit einem Abstand von 10 bis 50 mm vorliegen.

11. Textiles Flächengebilde **(1)** nach einem der Ansprüche 1 bis 10, **dadurch gekennzeichnet, dass** die Florschichten **(2)** überwiegend aus Stapelfasern gebildet sind.

12. Artikel, umfassend mindestens zwei flächig miteinander verbundene textile Flächengebilde **(1)** nach einem der Ansprüche 1 bis 11.

13. Bauteil, umfassend ein textiles Flächengebilde (1) nach einem der Ansprüche 1 bis 11, **dadurch gekennzeichnet, dass** das textile Flächengebilde **(1)** mit einer Polymermatrix imprägniert ist.

14. Bauteil, umfassend einen Artikel nach Anspruch 12, **dadurch gekennzeichnet, dass** der Artikel mit einer Polymermatrix imprägniert ist.

15. Verwendung des Bauteils nach einem der Ansprüche 13 oder 14 zur Herstellung von Teilen eines Automobils.

## Claims

1. Textile fabric (1) comprising a reinforcing mesh (3) and at least one web layer (2) located in a two-dimensional manner on at least one surface of the reinforcing mesh (3), **characterised in that** the textile fabric (1) has a mass per unit area of from 40 to 140 g/m², the web layer (2) consists predominantly of carbon fibres, the carbon fibres in the textile fabric (1) make up from 60 to 97 % of the mass per unit area, the reinforcing mesh (3) has a proportional mass per unit area of from 2.5 to 12.5 g/m², and the textile fabric (1) is bonded, wherein the reinforcing mesh (3) being located between two successive web layers (2).

2. Textile fabric (1) according to claim 1, **characterised in that** the textile fabric (1) has a mass per unit area of from 80 to 110 g/m²*,* the carbon fibres in the textile fabric (1) make up from 65 to 84 % of the mass per unit area, and the reinforcing mesh (3) has a proportional mass per unit area of from 3 to 10 g/m².

3. Textile fabric (1) according to either claim 1 or claim 2, **characterised in that** the material of the reinforcing mesh (3) comprises polyester and/or glass.

4. Textile fabric (1) according to any of claims 1 to 3, **characterised in that** the struts (30) of the reinforcing mesh have a linear mass density of from 120 to 350 dtex.

5. Textile fabric (1) according to any of claims 1 to 4, **characterised in that** the intersection points of the reinforcing mesh (3) have a binder.

6. Textile fabric (1) according to any of claims 1 to 5, **characterised in that** the reinforcing mesh (3) is formed as a stitch-bonded material.

7. Textile fabric (1) according to any of claims 1 to 6, **characterised in that** the reinforcing mesh (1) has a set of parallel longitudinal struts (4a) in a particular direction and sets of parallel diagonal struts (4b, 4c) diagonally to the parallel longitudinal struts, a set of parallel diagonal struts (4b) being arranged at an angle of greater than 45° and less than 90° with respect to the parallel longitudinal struts (4a) and another set of parallel diagonal struts (4c) being arranged at an angle of less than -45° and greater than -90° with respect to the parallel longitudinal struts, and the angles of the two sets of parallel diagonal struts (4b, 4c) with respect to the parallel longitudinal struts (4a) being the same in each case.

8. Textile fabric (1) according to claim 7, **characterised in that** the longitudinal struts (4a) are at a spacing of from 5 to 20 mm from one another, and the diagonal struts (4b, 4c) are at a spacing of from 7 to 50 mm from one another.

9. Textile fabric (1) according to any of claims 1 to 6, **characterised in that** the reinforcing mesh (3) is formed in a chequered manner.

10. Textile fabric (1) according to claim 9, **characterised in that** the struts (5a) arranged in each case so as to be parallel are spaced apart by from 10 to 50 mm.

11. Textile fabric (1) according to any of claims 1 to 10, **characterised in that** the web layers (2) are formed predominantly of staple fibres.

12. Object comprising at least two textile fabrics (1) according to any of claims 1 to 11 interconnected in a two-dimensional manner.

13. Component comprising a textile fabric (1) according to any of claims 1 to 11, **characterised in that** the textile fabric (1) is impregnated with a polymer matrix.

14. Component comprising an object according to claim 12, **characterised in that** the object is impregnated with a polymer matrix.

15. Use of a component according to either claim 13 or claim 14 for producing motor vehicle parts.

## Revendications

1. Structure textile plane (1) comprenant une grille de renforcement (3) et au moins une couche de voile (2) située à plat sur au moins une surface de la grille de renforcement, **caractérisée en ce que**
- la structure textile plane (1) présente une masse surfacique de 40 à 140 g/m²,
- la couche de voile (2) est constituée principalement de fibres de carbone,
- les fibres de carbone dans la structure textile plane (1) représentent entre 60 et 97 % de la masse surfacique,
- la grille de renforcement (3) présente une masse surfacique proportionnelle de 2,5 à 12,5 g/m², et
- la structure textile plane (1) est consolidée,
la grille de renforcement (3) se trouvant entre deux couches de voile (2) consécutives.

2. Structure textile plane (1) selon la revendication 1, **caractérisée en ce que**
- la structure textile plane (1) présente une masse surfacique de 80 à 110 g/m²,
- les fibres de carbone dans la structure textile plane (1) représentent entre 65 et 84 % de la masse surfacique, et
- la grille de renforcement (3) présente une masse surfacique proportionnelle de 3 à 10 g/m².

3. Structure textile plane (1) selon une des revendications 1 ou 2, **caractérisée en ce que** le matériau de la grille de renforcement (3) comprend du polyester et/ou du verre.

4. Structure textile plane (1) selon une des revendications 1 à 3, **caractérisée en ce que** les entretoises (30) de la grille de renforcement présentent un titre de 120 à 350 dtex.

5. Structure textile plane (1) selon une des revendications 1 à 4, **caractérisée en ce que** les points de croisement de la grille de renforcement (3) présentent un liant.

6. Structure textile plane (1) selon une des revendications 1 à 5, **caractérisée en ce que** la grille de renforcement (3) est constituée en tant que nappe de fils.

7. Structure textile plane (1) selon une des revendications 1 à 6, **caractérisée en ce que** la grille de renforcement (3) présente un assemblage d'entretoises longitudinales parallèles (4a) dans une certaine direction et des assemblages d'entretoises diagonales parallèles (4b, 4c), diagonalement par rapport aux entretoises longitudinales parallèles, un assemblage d'entretoises diagonales parallèles (4b) étant disposé en formant un angle supérieur à 45° et inférieur à 90°, et un autre assemblage d'entretoises diagonales parallèles (4c) étant disposé en formant un angle inférieur à -45° et supérieur à -90° avec les entretoises longitudinales parallèles (4a), et les angles des deux assemblages d'entretoises diagonales parallèles (4b, 4c) avec les entretoises longitudinales parallèles (4a) étant respectivement de valeur identique.

8. Structure textile plane (1) selon la revendication 7, **caractérisée en ce que** les entretoises longitudinales (4a) se présentent avec une distance de 5 à 20 mm entre elles, et les entretoises diagonales (4b, 4c) se présentent avec une distance de 7 à 50 mm entre elles.

9. Structure textile plane (1) selon une des revendications 1 à 6, **caractérisée en ce que** la grille de renforcement (3) est constituée en damier.

10. Structure textile plane (1) selon la revendication 9, **caractérisée en ce que** les entretoises disposées respectivement en parallèle (5a) se présentent avec une distance de 10 à 50 mm.

11. Structure textile plane (1) selon une des revendications 1 à 10, **caractérisée en ce que** les couches de voile (2) sont principalement composées de fibres discontinues.

12. Article, comprenant au moins deux structures textiles planes (1) raccordées à plat l'une à l'autre selon une des revendications 1 à 11.

13. Composant, comprenant une structure textile plane (1) selon une des revendications 1 à 11, **caractérisé en ce que** la structure textile plane (1) est imprégnée avec une matrice de polymère.

14. Composant, comprenant un article selon la revendication 12, **caractérisé en ce que** l'article est imprégné avec une matrice de polymère.

15. Utilisation du composant selon une des revendications 13 ou 14 pour la fabrication de pièces d'une automobile.
